# EUROPÄISCHE PATENTSCHRIFT

(11) **EP 1 800 234 B1**
(45) Veröffentlichungstag und Bekanntmachung des Hinweises auf die Patenterteilung: **09.06.2010**
(21) Anmeldenummer: 05777021.6
(22) Anmeldetag: 08.08.2005
(51) Int. Cl.: G06K 7/00

(54) **ELEKTRONISCHES MODUL ZUR PROGRAMMIERUNG KONTAKTBEHAFTETER UND/ODER KONTAKTLOSER CHIPKARTEN**
ELECTRONIC MODULE FOR PROGRAMMING CHIP CARDS COMPRISING AND/OR WITHOUT CONTACTS
MODULE ELECTRONIQUE POUR PROGRAMMER DES CARTES A PUCES AVEC ET/OU SANS CONTACT

(30) Priorität: 12.10.2004 DE 102004049671
(43) Veröffentlichungstag der Anmeldung: 27.06.2007
(73) Patentinhaber: Mühlbauer AG, 93426 Roding (DE)
(72) Erfinder: BRUMFIELD, Daniel, 93413 Cham (DE)
(74) Vertreter: Grünecker, Kinkeldey, Stockmair & Schwanhäusser Anwaltssozietät
(86) Internationale Anmeldenummer: PCT/EP2005/008576
(87) Internationale Veröffentlichungsnummer: WO 2006/039958

(56) Entgegenhaltungen:
- DE-A1- 10 127 124
- US-A- 4 392 207
- US-A1- 2004 103 415
- "73S1113F EMV Smart-Card Terminal Controller with Built-in ISO-7816 Interface and USB, Rev. 1.1"[Online] Juli 2004 (2004-07), Seiten 1-20, XP002352941 Gefunden im Internet: URL:http://www.scantec.de/Hi-Q-News/2004/T DK-Smart-Card-Controller/TDK-73S1113F-Data sheet.pdf> [gefunden am 2005-11-07]

## Beschreibung

Die vorliegende Erfindung bezieht sich auf ein elektronisches Modul zum Auslesen und/oder Einschreiben von Daten auf mindestens einem kartenförmigen Datenträger und insbesondere auf ein derartiges elektronisches Modul, das eine Steuereinheit zum Ansteuern mindestens einer Schnittstelle, die zum Empfangen und/oder Senden der Daten mit dem kartenförmigen Datenträger verbindbar ist, aufweist.

Kartenförmige Datenträger haben aufgrund zahlreicher Entwicklungen in verschiedensten Branchen wachsende Bedeutung erlangt. Insbesondere sogenannte Smart-Cards, die integrierte Schaltungen (Chips) umfassen, werden in den vielfältigsten Anwendungsbereichen eingesetzt, da sie wesentlich mehr Information speichern können als beispielsweise Magnetkarten. Im Bereich der Kredit- und Debitkarten finden Smart-Cards zunehmend Anwendung, da sie es ermöglichen, die Sicherheit der mit der Karte durchgeführten Transaktionen wesentlich zu erhöhen. Zusätzlich werden immer mehr Smart-Card-basierte Bonusprogramme durch den Handel oder andere Unternehmen eingesetzt und ein steigendes Bewusstsein gegenüber einem Missbrauch persönlicher Daten bei diversen Onlinetransaktionen führen zu einer zusätzlichen Nachfrage nach Smart-Card-Systemen im PC-Umfeld. Als sogenannte SIM-Karten (SIM = Subscriber Identity Module) haben derartige kartenbasierte Datenträger auch im Bereich der Telekommunikationsendgeräte große Verbreitung erlangt.

Weiterhin ist bei Chipkarten ist als eines der Hauptunterscheidungs-Merkmale anzusehen, ob es sich um eine Karte des kontaktbehafteten oder des kontaktlosen Typs handelt. Bei dem kontaktbehafteten Typ erfolgt die Energie- und Informationsübertragung über eine Kontaktanordnung; Beispiele hierfür sind die derzeit verwendeten Telefon- oder Geldkarten. Im Gegensatz hierzu erfolgt die Energie- und Informationsübertragung bei dem kontaktlosen Typ mittels induktiver oder kapazitiver Kopplung oder mittels Strahlungs-Kopplung.

Was die Informations- und Energieübertragung angeht, so gibt es auch Chipkarten, die hiervon Mischformen aufweise, z .B. wird die Energie induktiv übertragen, während die Informationsübertragung mittels Strahlungsenergie erfolgt. Chipkarten können ferner für beide Kopplungsarten - kontaktbehaftet oder kontaktlos - ausgebildet sein.

Bei der Herstellung und Programmierung derartiger Chipkarten müssen sowohl zu Testzwecken während des Fertigungsprozesses, wie auch vor der Auslieferung an den Kunden Daten in die Chipkarte oder eine Vorstufe derselben, beispielsweise ein Chipmodul, eingelesen oder davon wieder ausgelesen werden. Insbesondere bei der Herstellung derartiger Chipkarten und Chipmodule tritt das Problem auf, dass die Kommunikationsprotokolle, die für den Datenaustausch mit dem Chipmodul eingesetzt werden, sich je nach Kartentyp häufig ändern können.

Beispielsweise müssen verschiedene Einstellungen von Signalen vorgenommen werden können, wie verschiedene Taktfrequenzen, verschiedene Spannungswerte und Protokolltypen.

Üblicherweise werden Daten in die integrierte Schaltung einer Smart-Card mittels eines sogenannten Kartenlesers eingeschrieben, bzw. daraus ausgelesen. Dabei kann bei einigen der bekannten Lösungen die Taktfrequenz der Signalübertragung entsprechend den Erfordernissen der speziellen Chipkarte verändert werden. Aus der EP 0 889 429 B1 ist beispielsweise bekannt, dass der von einem Mikrocomputer gelieferte Systemtakt mittels eines digital programmierbaren Teilers entsprechend angepasst werden kann. Weiterhin ist es bekannt, mehrere Oszillatoren in dem Kartenleser vorzusehen, die entsprechend der benötigten Taktfrequenz aktiviert werden (siehe z.B. die US-Patentanmeldung US 2003/0024984 A1). Aus der US-Patentschrift 6,138,029 ist außerdem ein Smart-Card-Leser bekannt, bei dem ein erster und zweiter Oszillator mittels eines Schalters ausgewählt werden, um den Systemtakt bereitzustellen.

Weiterhin sind bekannte Smart-Card-Leser häufig mittels einer RS232/RS485-Schnittstelle oder einer USB-Schnittstelle mit einem übergeordneten Rechner verbunden. Für die unterschiedlichen Kommunikationsprotokolle werden dabei jeweils eigene Programme eingesetzt.

Aus der US 2004/103415 A1 ist ein Universal Card Interface (UCI) bekannt, das eine softwaregesteuerte Datenschnittstelle bildet, die eine Vielzahl von Smart-Cards und Kreditkarten unterstützt. Diese Vorrichtung besitzt eine Steuerung, die einen primären Mikroprozessor und einen unterstützenden Mikroprozessor umfasst. Als Beispiele für diese beiden Prozessoren sind ein Dallas DS5002 FP-16 Mikroprozessor für den primären Mikroprozessor und ein Motorola MC68302 für den unterstützenden Mikroprozessor angegeben. Die Intelligenz des Kartenlesers wird durch erweiterte Softwareschichten in Form von Mikroprozessorprogrammen erhöht. Wie außerdem im Detail anhand der Tabellen und der zugehörigen Beschreibung ausgeführt, verwendet das System gemäß dieser Druckschrift das proprietäre Betriebssystem und die zugehörigen Programmiersprachen der angegebenen Mikrocontroller. Insbesondere kann der eingebettete Bootloader nicht von außen vorgegeben werden.

Die Internet-Veröffentlichung "7351113F EMV Smart-Card Terminal Controller with Builtin ISO-7816 Interface and USB, Rev. 1.1"[Online] Juli 2004 (2004-07), Seiten 1-20, XPO02352941 Gefunden im Internet: URL:http://www.scantec.de/HI-Q-News/2004/T DK-Smart-Card-Controller/TDK-7351113F-Data sheet.pdf> [gefunden am 2005-11-07], offenbart einen elektronischen Schaltkreis und ein Verfahren für die Kommunikation mit zumindest zwei Chipkarten über zwei verschiedene Chipkartenschnittstellen. Die in dieser Druckschrift offenbarte Anordnung besitzt ein USART-Modul zur Kommunikation über eine der beiden Chipkartenstellen, das wahlweise über einen Port-Umschalter mit einer der beiden Schnittstellen verbunden werden kann. Beide Schnittstellen werden unabhängig von der Auswahl über den Port-Umschalter über eine analoge Schnittstelle mit Spannung versorgt, um eine möglichst rasche Umstellung der Kommunikation von einer auf die andere Schnittstelle zu ermöglichen.

Die DE 197 42 459 C2 offenbart eine Einrichtung für den Betrieb einer Chipkarte und den Datenaustausch zwischen der Chipkarte und einem mikroprozessorgestützen System, mit einer ersten Schnittstelle, die mit der Chipkarte verbindbar ist, und einer Steuereinheit zum Ansteuern der ersten Schnittstelle. Weiterhin wird in dieser Druckschrift erwähnt, dass die erste Schnittstelle zwei (oder mehr) der gezeigten Schnittstelleneinheiten umfassen kann. Die Steuereinheit ist ein "mikroprozessorgestütztes System", das entweder ein PC ist (Arbeitszeiterfassungssystem auf einem PC) oder ein tragbares, mikroprozessorgestütztes Endgerät. In jedem Fall ist die Steuereinheit von der Anwendung vorgegeben und nicht Gegenstand oder Element des Lesegeräts.

Es besteht daher der Bedarf, ein universell einsetzbares elektronisches Modul zu schaffen, mit dem eine Datenkommunikation mit einem kartenförmigen Datenträger auf besonders effektive flexible und schnelle Art und Weise durchgeführt werden kann.

Diese Aufgabe wird durch ein elektronisches Modul und ein zugehöriges Verfahren mit den Merkmalen der Patentansprüche 1 und 21 gelöst.

Die erfindungsgemäße Lösung basiert auf dem Gedanken, einen vollwertigen sogenannten Embedded PC über einen Standarddatenbus mit einer entsprechend konfigurierbaren Schnittstelle zu verbinden. Dabei bezeichnet ein Embedded PC ein Computersystem, das als integrierter ("eingebetteter") Bestandteil eines technischen Systems entworfen wird und in der Regel als steckbares Modul ausgeführt ist.

Embedded PCs, die in der industriellen Anwendung weit verbreitet sind, haben den Vorteig, dass sie als vorgefertigte Hardwarekomponenten mit weitreichender Funktionalität zugekauft und vom Anwender mit anwenderspezifischer Software ausgestattet werden könnten. Dabei kann die Programmierung mit Hilfe verbreiteter höherer Programmiersprachen erfolgen und eine Einarbeitung in proprietäre Systeme ist nicht mehr erforderlich.

Der Einsatz eines Embedded PC in dem erfindungsgemäßen elektronischen Modul eröffnet die Möglichkeit, mit der Schnittstelle zur Chipkarte über einen Datenbus zu kommunizieren und mit einem optionalen übergeordneten Rechner, der beispielsweise umfangreiche Datenbanken enthalten kann oder den Zugang zum Internet bereitstellt, mittels einer netzwerktauglichen Schnittstelle, wie einer Ethernetschnittstelle, zu kommunizieren. Gleichzeitig bietet die Verwendung eines Embedded PC aber auch den Vorteil, dass vergleichsweise komplexe Kodieraufgaben auch ohne die Verwendung eines zusätzlichen Rechners, sondern ausschließlich unter der Steuerung des erfindungsgemäßen Moduls durchgeführt werden können.

Durch die Verwendung des Embedded PC ist sichergestellt, dass bei einem optionalen übergeordneten Steuerrechner keinerlei Modifikationen vorgenommen werden müssen und das erfindungsgemäße Modul als standardmäßiges Peripheriegerät angesteuert werden kann.

Aufgrund des Einsatzes eines Standarddatenbuses, beispielsweise eines sogenannten Peripheral Component Interconnect (PCI)-Bus können sämtliche Einstellungen und Datentransfers über einfache und schnelle Speicherzugriffe durchgeführt werden. Kritische Zeitsteuerungen können von digitalen Schaltungen in der Schnittstelle übernommen werden und die Software kann in vorteilhafter Weise dadurch signifikant entlastet werden.

Embedded PCs sind definitionsgemäß modulare Bauelemente, die ohne Aufwand austauschbar sind. Daher ist es möglich, die Leistungsfähigkeit und auch die verfügbare Speichergröße der benötigten Speicherelemente durch ein einfaches Austauschen des Embedded Boards oder des Speicherriegels, die beispielsweise als Standard-SO-DIMM-Komponenten ausgeführt sind, zu verändern. Die Leistungsfähigkeit des Moduls kann auf diese Weise durch ein einfaches Plug-and-Play-Verfahren erhöht werden.

Mit dem erfindungsgemäßen elektronischen Modul ist es möglich, die Datenkommunikation mit Chipkarten durchzuführen, die ein weitgefächertes Spektrum an Kommunikationsprotokollen unterstützen. Dies ist insbesondere dann von Bedeutung, wenn mit geringem apparativem Aufwand Karten für die verschiedensten Anwendungszwecke überprüft oder programmiert werden sollen.

Erfindungsgemäß ist die Schnittstelle zu der Chipkarte in zwei Schnittstelleneinheiten unterteilt, von denen jede die für einen unterschiedlichen Protokolltyp benötigten Bestandteile umfasst. Selbstverständlich ist die vorliegende Erfindung nicht auf diese beiden Schnittstelleneinheiten beschränkt, es können vielmehr auch mehr als zwei Einheiten vorgesehen sein.

Gemäß einer vorteilhaften Ausführungsform wird die erste Schnittstelleneinheit durch eine serielle Schnittstelle mit automatischem byteweisem Datentransfer für asynchrone serielle Protokolle gebildet. Die zweite Schnittstelleneinheit umfasst einen semiautomatischen Wellenformgenerator für Synchron- oder Customprotokolle. Beide Schnittstelleneinheiten werden direkt über den Datenbus angesprochen. Der Embedded PC wählt die für eine spezielle Chipkarte benötigte Schnittstelleneinheit und führt die Kommunikation dann über diese Schnittstelleneinheit durch. Diese Auswahl kann dabei entweder aufgrund einer Abfrage bei der Chipkarte oder aber durch eine Voreinstellung durch den Benutzer erfolgen.

Gemäß einer vorteilhaften Weiterbildung umfasst die erste Schnittstelle dabei ein sogenanntes Field Programmable Gate Array (FPGA), auf dem die benötigten Funktionen der einzelnen Schnittstelleneinheiten in besonders effizienter Weise realisiert werden könnten. Dabei bieten FPGAs ganz allgemein den Vorteil, dass der Entwicklungsaufwand gering ist und eine Anpassung an geänderte Anforderungen schnell und einfach durchgeführt werden kann. Insbesondere können die programmierbaren Speicherelemente (PROM) bei einem FPGA problemlos ausgetauscht werden und erlauben so ein einfaches Hardware-Upgrade.

Gemäß einer weiteren vorteilhaften Ausführungsform sind zwei erste Schnittstellen vorgesehen, von denen beide die Möglichkeit bieten, über unterschiedliche Schnittstelleneinheiten mit einer Chipkarte zu kommunizieren. Auf diese Weise kann das erfindungsgemäße elektronische Modul mehr als eine Chipkarte gleichzeitig programmieren oder auslesen. Hier kommt die erfindungsgemäße Verwendung eines Embedded PC und eines Datenbusses zur Kommunikation mit den Schnittstellen besonders zum Tragen, da hier eine echte parallele Prozessierung von Chipkarten ermöglicht wird.

Gemäß einer weiteren vorteilhaften Ausführungsform umfasst die erste Schnittstelle eine steckbare Interface-Schaltung zum Anschließen eines separaten Kontaktierkopfes. Derartige Kontaktierköpfe stellen den elektrischen Kontakt zu den von außen zugänglichen Kontakten einer Chipkarte her. Dabei können auch Kontaktierköpfe angesteuert werden, die dazu geeignet sind, die noch nicht vollständig in einer Chipkarte eingebetteten Chipmodule, beispielsweise zu Testzwecken, zu kontaktieren. Alternativ kann ein derartiger Kontaktierkopf auch die kontaktlose Verbindung zu einer Chipkarte herstellen.

Gemäß einer weiteren vorteilhaften Ausführungsform ist mindestens ein Kontaktierkopf, ein im Folgenden als interner Kopf bezeichneter Kontaktierkopf, direkt auf dem erfindungsgemäßen elektronischen Modul angeordnet. Dieser Kontaktierkopf, der für eine Chipkarte beispielsweise mittels eines Steckplatzes zugänglich ist, bietet den Vorteil, dass Zugangsberechtigungen oder Kryptoschlüssel, die auf einer solchen weiteren Chipkarte abgelegt sein können, abgefragt werden können, ohne dass Verschlüsselungen beispielsweise zwischen einer externen Datenbank und dem elektronischen Modul übertragen werden müssen. Die Entschlüsselung kann dann direkt auf dem elektronischen Modul selbst stattfinden und ein gegebenenfalls vorhandener übergeordneter Steuer-PC ist von derartigen Aufgaben entlastet.

Eine wesentliche Schwierigkeit bei der Anpassung eines Kartenlese- bzw. -schreibgeräts an bestimmte Chipkartentypen besteht darin, dass teilweise unterschiedliche Taktfrequenzen benötigt werden. Gemäß einer vorteilhaften Ausführungsform der vorliegenden Erfindung wird der benötigte Systemtakt mittels einer phasenverastenden Regelschleife (einer sogenannten Phase Locked Loop, PLL) eingestellt, die einen Rückkopplungsteiler umfasst, der in dem Rückkopplungspfad der phasenverastenden Regelschleife angeordnet ist.

Erfindungsgemäß kann das Teilerverhältnis dieses Rückkopplungsteilers mittels eines über den Datenbus gesendeten Befehls den Erfordernissen gemäß eingestellt werden. Wenn der Rückkopplungsteiler der PLL-Schaltung in einem FPGA, das auch die Schnittstelle realisiert, angeordnet ist, kann das Teilerverhältnis des Teilers durch ein über den Datenbus beschreibbares Register festgelegt werden. Dies erlaubt verschiedene Timing-Einstellungen, ohne dass die Taktfrequenz des Prozessors selbst geändert werden müsste. Zudem kann auf diese Art und Weise die Frequenz glitch-frei über einen einfachen Speicherzugriff umgeschaltet werden. Schließlich erlaubt diese Anordnung ein genaues Frequenzverhalten über einen großen Frequenzbereich und mit einer hohen Auflösung.

Um die Flexibilität bei der Einstellbarkeit der Taktfrequenz noch weiter zu erhöhen, kann die Ausgangsfrequenz der PLL-Schaltung durch einen weiteren Teiler, der ebenfalls über den Datenbus ansprechbar ist, nochmals heruntergeteilt werden. Dabei sollte die Umschaltung dieser Postteilung synchron zu der langsamsten Frequenz erfolgen. Die gesamten Schaltungen der ersten Schnittstelle werden dann mit der dadurch entstehenden Frequenz betrieben.

Zum besseren Verständnis der vorliegenden Erfindung wird diese anhand der in den nachfolgenden Figuren dargestellten Ausführungsbeispiele näher erläutert. Dabei werden in den unterschiedlichen beschriebenen Ausführungsformen gleiche Teile mit gleichen Bezugszeichen und gleichen Bauteilbezeichnungen versehen, wobei die in der gesamten Beschreibung enthaltenen Offenbarungen sinngemäß auf gleiche Teile mit gleichen Bezugszeichen bzw. Bauteilbezeichnungen übertragen werden können.

Es zeigen:
- **Figur 1**: ein Prinzipschaltbild eines Chipkartensystems gemäß der vorliegenden Erfindung;
- **Figur 2**: ein vereinfachtes Blockschaltbild eines Embedded PC;
- **Figur 3**: eine erste Ausführungsform eines elektronischen Moduls gemäß der vorliegenden Erfindung;
- **Figur 4**: einen Ausschnitt des elektronischen Modus gemäß Figur 3;
- **Figur 5**: ein vereinfachtes Prinzipschaltbild eines FPGA.

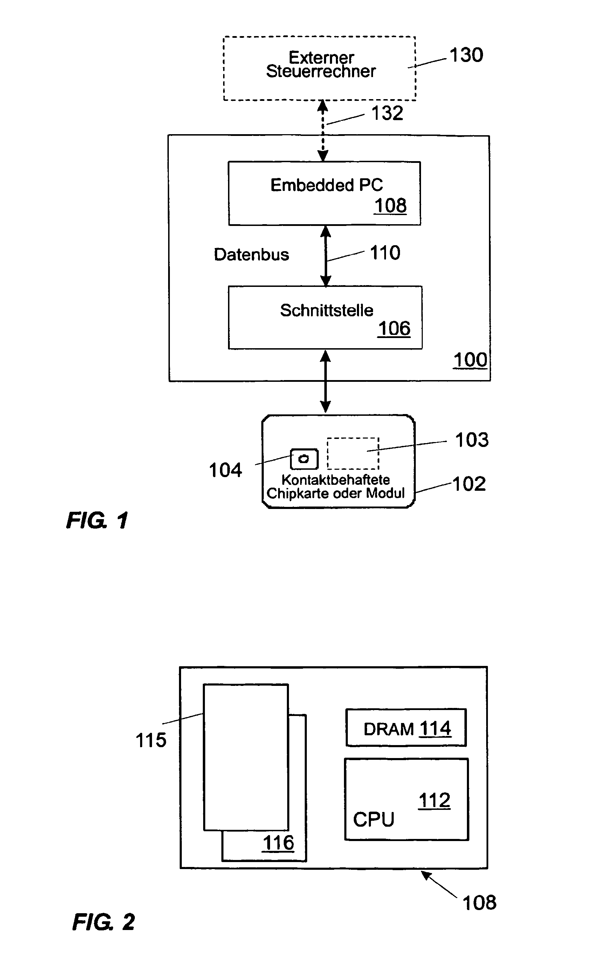

Mit Bezug auf Figur 1 soll im Folgenden das Grundprinzip der vorliegenden Erfindung näher erläutert werden. Das erfindungsgemäße elektronische Modul 100 dient der Kommunikation mit einer Chipkarte 102, die zur Speicherung und eventuellen Verarbeitung von Daten mindestens eine integrierte Schaltung 103, den Chip, aufweist. Die Chipkarte kann sowohl eine sogenannte Smart-Card oder Media-Card im Scheckkartenformat sein, wie auch eine sogenannte SIM-Karte mit geringeren Abmessungen.

Weiterhin lässt sich die vorliegende Erfindung auch in sehr vorteilhafter Weise für Testvorrichtungen einsetzen, bei denen nicht mit der fertig montierten Chipkarte, sondern mit der integrierten Schaltung 103 in einer noch nicht vollständig montierten Vorstufe, beispielsweise einem auf einem Endlosband vorliegenden Chipmodul kommuniziert werden soll.

Weiterhin befassen sich die im Folgenden dargestellten Ausführungsformen hauptsächlich mit der Kommunikation mit einer kontaktbehafteten Chipkarte. Selbstverständlich lassen sich die erfindungsgemäßen Ausführungsformen aber auch auf nicht drahtgebundene Kommunikationsformen anwenden.

Wie in Figur 1 gezeigt, wird die Chipkarte 102 im Falle einer kontaktbehafteten Chipkarte über elektrische Kontakte 104 mit einer ersten Schnittstelle 106 verbunden. Die Belegung der Kontakte und die zugehörigen Signale können beispielsweise wie in ISO 7816 spezifiziert ausgelegt sein. Allerdings ist klar, dass sich die erfindungsgemäßen Prinzipien auch für den Fall kontaktloser Chipkarten einsetzen lassen.

Das Modul 100, das beispielsweise für den Einbau in eine Vorrichtung zum Testen von Chipkarten in der Chipkartenfertigung eingebaut sein oder auch zur Programmierung von Chipkarten vor der Auslieferung an den Endbenutzer verwendet werden kann, kommuniziert mit der Chipkarte 102 über die erste Schnittstelle 106. Erfindungsgemäß weist das elektronische Modul 100 einen Embedded PC 108 auf, der über einen Datenbus 110 mit der ersten Schnittstelle in Verbindung steht. Dadurch, dass der Embedded PC voll busfähig ist und eine sehr hohe Funktionalität beinhaltet, können die Kommunikationsprotokolle der ersten Schnittstelle sehr flexibel gehandhabt werden.

Als Embedded PC-Modul 108 kommt beispielsweise eine steckbare ETX-Karte in Frage. Dabei steht die Abkürzung ETX für "Embedded Technology eXtended" und bezeichnet einen Formfaktor zur Entwicklung sogenannter Embedded Systems, bei dem zur Vereinfachung des Designs auf Kabel und Steckverbinder weitestgehend verzichtet wird. Der ETX-PC zeichnet sich durch relativ geringe Abmessungen (114mm x 95mm, maximale Dicke 12mm) aus. Allerdings sind auch beliebige andere Kartenformate verwendbar. Figur 2 zeigt schematisch eine derartige Anordnung, wobei der Embedded PC 108 in der Regel ein CPU-Modul 112, diverse Speicher 114, 116 sowie verschiedene Schnittstellen, wie PCI-Busschnittstelle und Ethernetschnittstelle 115, aufweist. Für eine problemlose Aufrüstbarkeit kann einer oder mehrere der Speicher 114, 116 im SO-DIMM-Format steckbar gestaltet sein.

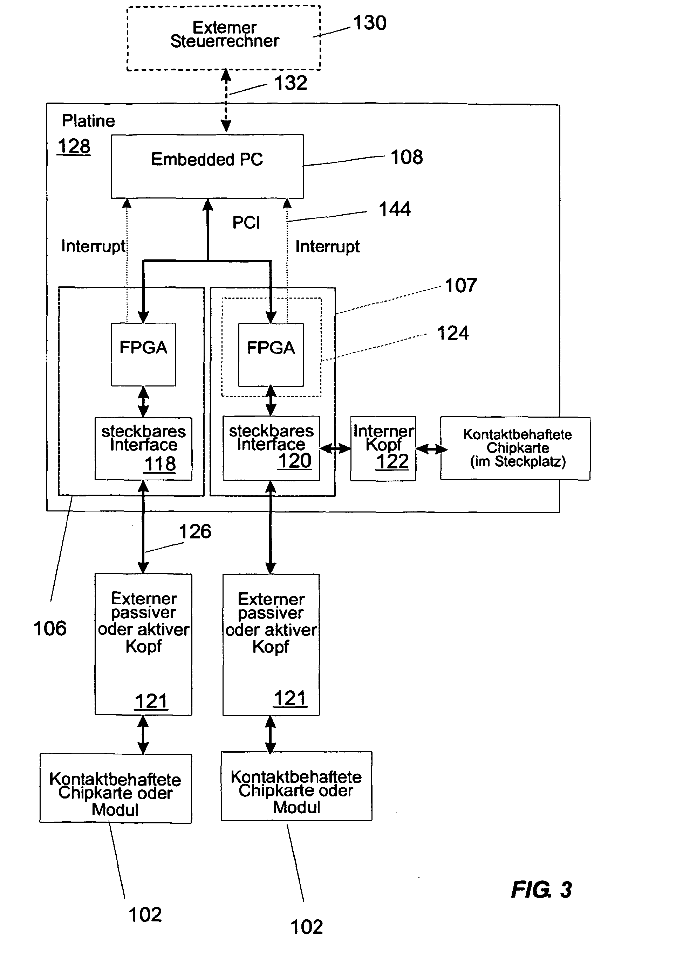

Figur 3 zeigt in stark schematisierter Darstellungsweise ein Blockschaltbild eines erfindungsgemäßen elektronischen Moduls 100 gemäß einer möglichen Ausführungsform, wie sie bei der Herstellung von Chipkarten bei großem Durchsatz für eine Programmierung der Karten von Vorteil sein könnte.

Gemäß der in Figur 3 dargestellten Ausführungsform umfasst das erfindungsgemäße elektronische Modul 100 insgesamt zwei erste Schnittstellen 106, 107, die jeweils über eine steckbare Interface-Schaltung 118, 120 mit Kontaktierköpfen 122, 121 zum elektrischen Kontaktieren der Chipkarten 102 verbunden sind. Dabei ist der Kontaktierkopf 122 ein interner Kopf, d.h. er ist direkt auf der Platine des Moduls 100 montiert und über einen Steckplatz von außen für die Chipkarte 102 zugänglich. Dieser interne Kopf 122 wird, wie im Folgenden noch genauer erläutert wird, für die Kommunikation mit einer die Zugangsberechtigung oder einen Kryptoschlüssel enthaltenden Karte benötigt.

Jede der Schnittstellen 106 enthält ein Field Programmable Gate Array (FPGA) 124, das die wesentlichen Schnittstellenkomponenten beinhaltet.

Jedes FPGA 124 besitzt eine eigene PCI-Bus-Schnittstelle und steuert jeweils eine unabhängige steckbare Interfaceschaltung 118, 120 an. Die Interfaceschaltungen 118 kommunizieren dann mit der integrierten Schaltung der Chipkarte 102 bzw. des ungehäusten Moduls über den Kontaktierkopf. Der Kontaktierkopf 121 ist entweder ein sogenannter aktiver oder ein passiver Kopf, d. h. er dient entweder nur der elektrischen Kontaktierung der Chipkarte oder übernimmt darüber hinaus auch eine Signalvorverarbeitung. Aktive Köpfe, die eine Signalvorverarbeitung enthalten, haben den Vorteil, dass die vorverarbeiteten Signale leichter und mit weniger Störungen zu dem elektronischen Modul geleitet werden können. Dies ist insbesondere dann vorteilhaft, wenn die Zuleitung 126 relativ lang ist.

Die Interfaceschaltung 118, 120 kann in einer vorteilhaften Ausführungsform modular auf die Platine 128 des elektronischen Moduls aufgesteckt werden. Eine Anpassung an unterschiedliche externe Köpfe 121 ist auf diese Weise problemlos möglich. Gemäß der vorliegenden Ausführungsform unterscheiden sich die beiden ersten Schnittstellen 106, 107 darin, dass die Schnittstelle 107 zusätzlich einen internen Kartenleser 122 ansteuern kann. Mit diesem können z.B. Zugangsberechtigungen oder Kryptoschlüssel abgefragt werden, ohne dass die Verschlüsselungen zwischen einer Datenbank und der Platine 128 übertragen werden müssen. Die Entschlüsselung kann direkt auf der Platine 128 selbst stattfinden und entlastet somit einen möglicherweise vorhandenen übergeordneten Steuer-PC. Die eigentliche Steuerung erfolgt über den Embedded PC 108, der mit den beiden Schnittstellen 106 und 107 über den PCI-Bus 110 in Verbindung steht.

Optional kann der Embedded PC mit einer übergeordneten Rechnereinheit, in der beispielsweise auch Datenbanken lokalisiert sind, über eine Ethernetverbindung 132 in Kontakt stehen. Die übergeordnete Steuerung 130 kann aber auch entfallen, wenn beispielsweise nur einfache Testaufgaben durchgeführt werden sollen, für welche die Funktionalität des Embedded PC 108 ausreicht. Über den PCI-Bus 110 kann außerdem ein Interrupt-Signal von dem FPGA 124 an den Embedded PC 108 übertragen werden.

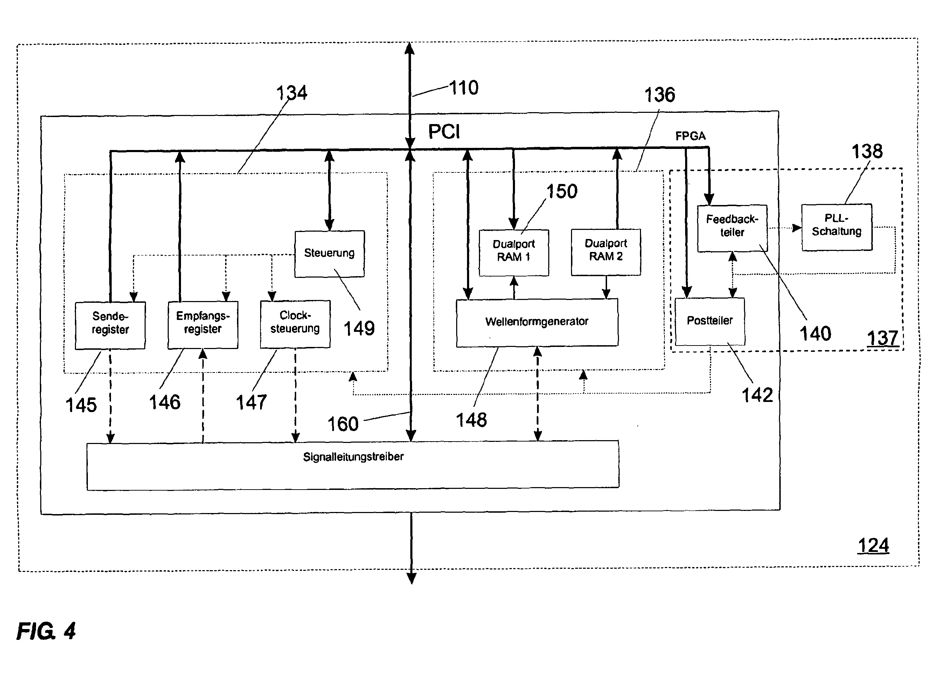

Mit Bezug auf Figur 4 soll im Folgenden eine mögliche vorteilhafte Ausführungsform des FPGA 124 beschrieben werden. Wie in Figur 4 erkennbar, sind in jedem dieser FPGAs 124 jeweils zwei unterschiedliche Schnittstelleneinheiten 134, 136 enthalten. Entsprechend dem benötigten Kommunikationsprotokoll der zu programmierenden Chipkarte kann über den PCI-Bus 110 eine der beiden Einheiten 134 oder 136 angewählt werden. Dabei kann diese Auswahl automatisch auf der Basis einer Abfrage der Chipkarte erfolgen oder aber über eine von einem Benutzer getroffene Voreinstellung. Zusätzlich zu der Kommunikation über die Schnittstelleneinheiten 134, 136 kann über den PCI-Bus 110 auch direkt auf die Kontaktpins zugegriffen werden, wie dies der Doppelpfeil 160 zwischen dem PCI-Bus 110 und den Signalleitungstreibern symbolisiert.

Bei beiden Schnittstelleneinheiten 134, 136 erfolgt die Zeit- oder Taktsteuerung über eine phasenverastende Regelschleife, eine sogenannte Phase Locked Loop (PLL)-Schaltung 138. Um mit Hilfe der PLL-Schaltung 138 auf einfache Weise einen einstellbaren Systemtakt zu erhalten, wird der sogenannte Feedback-Teiler, d. h. der Rückkopplungsteiler, der in dem Rückkopplungszweig der phasenverastenden Regelschleife angeordnet ist, in dem FPGA 124 realisiert.

Das Teilerverhältnis des Teilers 140 wird durch ein über den PCI-Bus 110 beschreibbares Register festgelegt. Die von der PLL-Schaltung 138 gelieferte Ausgangsfrequenz kann dann wahlweise nochmals durch einen Postteiler 142 geteilt werden. Das Teilungsverhältnis des Postteilers wird erfindungsgemäß ebenfalls mittels des PCI-Buses 110 eingestellt. Dabei erfolgt die Umschaltung der Postteilung synchron zu der langsamsten Frequenz. Die gesamten Schaltungen der FPGA-Schnittstellen 124 können dann mit der dadurch entstehenden Frequenz betrieben werden. Dies erlaubt verschiedene Timing-Einstellungen, je nach den Erfordernissen der speziellen Chipkarten, ohne dass die Frequenz des Prozessors am Embedded PC 108 geändert werden muss. Zudem kann die benötigte Frequenz glitch-frei über einen einfachen Speicherzugriff umgeschaltet werden und die Frequenz kann sehr genau über einen großen Bereich mit hoher Auflösung festgelegt werden.

Die Funktionsweise der Schnittstelleneinheiten 134, 136 soll nun mit Bezug auf Figur 4 im Detail erläutert werden. Die erste Schnittstelleneinheit 134 dient einer Kommunikation mit der Chipkarte in einem sogenannten Prozessormode. Die Schnittstelleneinheit 134 besteht aus einer seriellen Schnittstelle mit automatischem, byteweisem Datentransfer für asynchrone serielle Protokolle, wobei die Konvention, also beispielsweise die Festlegung, ob ein hohes oder ein niedriges Potential als logische Eins interpretiert wird, die Bitrichtung (MSB oder LSB zuerst), die Parity, die Anzahl und der Pegel der Start- und Stopbits, die Anzahl der Datenbit usw., von der übergeordneten Software verwaltet wird. Die Software, die in dem Embedded PC 108 abgelegt sein kann, bereitet die Daten vor und sendet sie dann byteweise an die Schnittstelle 106. Die Schnittstelle 106 bzw. 107 sendet die Daten selbständig zu der Chipkarte 102 und bestätigt die fehlerfreie Übertragung. Zudem überwacht die Schnittstelleneinheit 134 auch die Einhaltung von Mindestwartezeiten. Nach Ablauf der Übertragung und/oder der Mindestwartezeiten wird der Embedded PC 108 durch ein Interrupt-Signal 144 benachrichtigt. Für alle von der Schnittstellen einheit direkt gesteuerten Aufgaben ist eine Schnittstellensteuerung 149 vorgesehen.

Daten, die von der Chipkarte gesendet werden, empfängt die Schnittstelleneinheit ebenfalls selbstständig und benachrichtigt den Embedded PC 108, dass empfangene Daten abgeholt werden können. Diese sind in einem Empfangsregister 146 abgelegt. Das Taktsignal wird ebenfalls von der Schnittstelleneinheit 134 mittels einer Clocksteuerung 147 gesteuert. Dabei wird das Taktsignal gestartet, umgeschaltet oder gestoppt, ohne dass störende Glitches entstehen. Zudem ist ein definierter Stoppzustand möglich.

Die zweite Schnittstelleneinheit 136 ermöglicht die Kommunikation mit der Chipkarte in einem sogenannten Memory-Mode. Die zweite Schnittstelleneinheit umfasst einen semiautomatischen Wellenformgenerator 148 für Synchron- oder Custom-Protokolle. Dabei werden in ein Dualport Random Access Memory (RAM) 150 mittels einen Burst-Zugriffes über den PCI-Bus 110 vorbereitete Signalsequenzen gefüllt und der Wellenformgenerator 148 dann gestartet. Der Wellenformgenerator 148 arbeitet die Signalsequenz ab, indem die einzelnen Datensätze aus dem Dualport RAM 150 geholt und ausgeführt werden. Jeder Datensatz besteht aus einem auszugebenden Signalzustand, einer Wartezeit und verschiedenen Flags. Zuerst werden die Signalzustände ausgegeben und die Signalleitungen in Abhängigkeit der Flags abgetastet. Dann wird die Wartezeit abgewartet. Dieser Vorgang wird solange wiederholt, bis in dem Datensatz das gesetzte End-Flag erreicht wird. Anschließend beendet der Wellenformgenerator 148 die Ausgabe und benachrichtigt den Embedded PC 108 über ein Interrupt-Signal 144. Die während der Sequenzabarbeitung angefallenen Abtastungen werden in einem zweiten Dualport RAM 152 abgelegt. Diese Abtastungen werden dann über einen Burst-Speicherzugriff von der Software abgeholt und können ausgewertet werden.

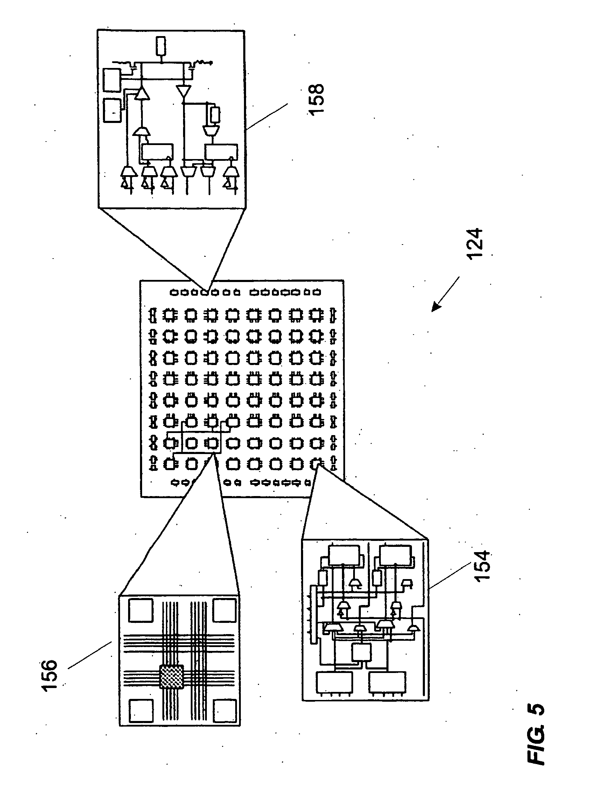

Der typische Aufbau des FPGA 124 ist schematisch in Figur 5 gezeigt. Ganz allgemein ist ein FPGA als freikonfigurierbarer Pool elementarer Logikbausteine zu betrachten. Konfigurierbare Logikblöcke 154 und die Verbindungen 156 zwischen diesen logischen Blöcken können von einem Benutzer frei programmiert werden. Es ist daher möglich, eine Vielzahl digitaler Schaltungen von Gattern und Zählern über FlFOs und Speicher, bis hin zu Steuerungen auf einem FPGA zu realisieren. Die Verbindung zur Außenwelt geschieht über die Eingabe-/Ausgabeblöcke 158, die in Figur 5 ebenfalls schematisch dargestellt sind. Aufgrund ihrer Flexibilität können FPGAs vor allem verschiedene Aufgaben parallel ausführen und können auf besonders einfache Weise neuen Anforderungen angepasst werden.

## Patentansprüche

1. Elektronisches Modul zum Auslesen und/oder Einschreiben von Daten auf mindestens eine Chipkarte (102), mit mindestens einer ersten Schnittstelle (106), die zum Empfangen und/oder Senden von Daten mit der Chipkarte (102) verbindbar ist, und einer Steuereinheit (108) zum Ansteuern der ersten Schnittstelle (106), wobei die erste Schnittstelle (106) eine erste Schnittstelleneinheit (134) und eine zweite Schnittstelleneinheit (136) umfasst:
**dadurch gekennzeichnet, dass** die erste Schnittstelle (106) ein Field Programmable Gate Array, FPGA, (124) umfasst, dass die Steuereinheit (108) durch einen busfähigen Embedded PC gebildet ist, der über einen Datenbus (110) mit der ersten Schnittstelle (106) kommuniziert, dass die erste Schnittstelleneinheit (134) als Teil des FPGA (124) so ausgebildet und konfiguriert ist, dass sie Daten mit der Chipkarte (102) unter Verwendung eines ersten Kommunikationsprotokolls austauscht, und
dass die zweite Schnittstelleneinheit (136), ein von der ersten Schnittstelleneinheit (134) unterschiedliches Teil des FPGA (124) ist und so ausgebildet und konfiguriert ist, dass sie Daten mit der Chipkarte (102) unter Verwendung mindestens eines zweiten Kommunikationsprotokolls austauscht,
wobei der Embedded PC (108) so ausgebildet ist, dass er für das Empfangen und/oder Senden der Daten für die Herstellung, Programmierung und das Testen von Chipkarten (102) eine der Schnittstelleneinheiten (134, 136) in Abhängigkeit von einem der Chipkarte (102) zugeordneten Protokolltyp auswählt.

2. Elektronisches Modul nach Anspruch 1, wobei das erste Kommunikationsprotokoll ein asynchrones Protokoll ist und das mindestens eine zweite Protokoll ein synchrones Protokoll ist.

3. Elektronisches Modul nach Anspruch 2, wobei die erste Schnittstelleneinheit (134) ein Senderegister (145) zum Speichern der an den kartenförmigen Datenträger (102) zu übertragenden Daten, ein Empfangsregister (146) zum Speichern der von dem kartenförmigen Datenträger empfangenen Daten, eine Taktsteuerungseinheit (147) zum Steuern eines Übertragungstaktes sowie eine Schnittstellensteuerung (149) zum Steuern der asynchronen Datenübertragung aufweist.

4. Elektronisches Modul nach Anspruch 2 oder 3, wobei die zweite Schnittstelleneinheit (136) einen Wellenformgenerator (148) zum Erzeugen eines Sendesignals, der über mindestens einen Speicher mit wahlfreiem Zugriff (150) mit dem Datenbus (110) verbunden ist, aufweist.

5. Elektronisches Modul nach mindestens einem der vorangegangenen Ansprüche, wobei die mindestens eine erste Schnittstelle (106) weiterhin mindestens einen Kontaktierkopf (121, 122) zum elektrischen Kontaktieren von elektrischen Anschlüssen des kartenförmigen Datenträgers (102) aufweist.

6. Elektronisches Modul nach Anspruch 5, wobei mindestens einer der Kontaktierköpfe als separates externes Kontaktierkopfmodul (121) aufgebaut ist.

7. Elektronisches Modul nach Anspruch 5 oder 6, wobei mindestens einer der Kontaktierköpfe in dem elektronischen Modul (100) integriert aufgebaut ist.

8. Elektronisches Modul nach einem der Ansprüche 5 bis 7, wobei die mindestens eine erste Schnittstelle (106) eine steckbare Interfaceschaltung (118) zum Anschließen des Kontaktierkopfes (121, 122) aufweist.

9. Elektronisches Modul nach einem der Ansprüche 5 bis 8, wobei der Kontaktierkopf (121, 122) dazu eingerichtet ist, eine Signalvorverarbeitung der von dem kartenförmigen Datenträger (102) empfangenen Daten durchzuführen.

10. Elektronisches Modul nach einem der Ansprüche 5 bis 9, wobei der Kontaktierkopf (121, 122) ein passiver Kontaktierkopf ist.

11. Elektronisches Modul nach einem der vorangegangenen Ansprüche, wobei der Datenbus (110) ein Peripheral Component Interconnect Bus ist.

12. Elektronisches Modul nach einem der vorangegangenen Ansprüche, wobei das elektronische Modul (100) eine Taktgebereinheit (137) aufweist, die ein in Abhängigkeit von Steuersignalen der Steuereinheit (108) ein einstellbares Taktsignal erzeugt.

13. Elektronisches Modul nach Anspruch 12, wobei die Taktgebereinheit (137) eine phasenverrastende Regelschleife (138) mit einem Rückkopplungsteiler (140), der in einem Rückkopplungspfad der phasenverrastenden Regelschleife angeordnet ist, umfasst und wobei das Teilerverhältnis des Rückkopplungsteilers (140) in Antwort auf das Steuersignal einstellbar ist.

14. Elektronisches Modul nach Anspruch 13, wobei der Rückkopplungsteiler (140) als Field Programmable Gate Array aufgebaut ist.

15. Elektronisches Modul nach einem der Ansprüche 13 oder 14, wobei die Taktgebereinheit (137) einen zweiten Teiler (142) aufweist, der zum Erzeugen des Taktsignals das Ausgangssignal der phasenverrastenden Regelschleife (138) empfängt, und dessen Teilerverhältnis von der Steuereinheit (108) einstellbar ist.

16. Elektronisches Modul nach Anspruch 15, wobei der zweite Teiler (142) als Field Programmable Gate Array aufgebaut ist.

17. Elektronisches Modul nach mindestens einem der vorangegangenen Ansprüche, wobei mindestens eine zweite Schnittstelle (132) zur Kommunikation mit einer übergeordneten Steuereinheit (130) vorgesehen ist.

18. Elektronisches Modul nach Anspruch 17, wobei die zweite Schnittstelle (132) eine Ethernetschnittstelle ist.

19. Elektronisches System mit einem elektronischen Modul (100) nach mindestens einem der vorangegangenen Ansprüche und mindestens einem kartenförmigen Datenträger (102), wobei der Datenträger durch eine SIM-Karte, eine Smart-Card, eine Flashkarte oder eine Multimediakarte gebildet ist.

20. Elektronisches System mit einem elektronischen Modul (100) nach mindestens einem der Ansprüche 1 bis 18 und mindestens einer Chipkarte (102), wobei die Chipkarte durch ein noch nicht vollständig montiertes Chipmodul gebildet ist.

21. Verfahren für die Herstellung, Programmierung und das Testen von Chipkarten mittels eines elektronischen Moduls nach einem der Ansprüche 1 bis 18, wobei das Verfahren die folgenden Schritte umfasst:
Verbinden der Chipkarte mit der ersten Schnittstelle, welche die erste und die zweite Schnittstelleneinheit aufweist,
Auswählen einer Schnittstelleneinheit der ersten Schnittstelle in Übereinstimmung mit einem vorbestimmten, zu der Chipkarte gehörigen Kommunikationsprotokoll durch einen busfähigen Embedded PC,
Ansteuern der ausgewählten Schnittstelleneinheit durch den Embedded PC über einen Datenbus zum Senden und/oder Empfangen der Daten.

22. Verfahren nach Anspruch 21, wobei im Falle, dass zu dem kartenförmigen Datenträger ein asynchrones Kommunikationsprotokolls gehört, eine erste Schnittstelleneinheit ausgewählt wird und das Ansteuern der ausgewählten Schnittstelleneinheit umfasst:
Vorbereiten von zu sendenden Daten durch den Embedded PC und byteweise Übertragung an ein Senderegister der ersten Schnittstelleneinheit über den Datenbus.

23. Verfahren nach Anspruch 22, wobei die Daten aus dem Senderegister unter der Steuerung einer Schnittstellensteuerung an den kartenförmigen Datenträger gesendet werden und nach Beenden der Übertragung von der Schnittstellensteuerung ein Interruptsignal an den Embedded PC übertragen wird.

24. Verfahren nach Anspruch 23, wobei die Schnittstellensteuerung weiterhin die Einhaltung von Mindestwartezeiten überwacht.

25. Verfahren nach einem der Ansprüche 22 bis 24, wobei Daten, die von dem kartenförmigen Datenträger gesendet werden, in einem Empfangsregister der ersten Schnittstelleneinheit abgelegt werden und die Schnittstellensteuerung den Embedded PC benachrichtigt.

26. Verfahren nach Anspruch 25, wobei im Falle, dass zu dem kartenförmigen Datenträger ein synchrones Kommunikationsprotokoll gehört, eine zweite Schnittstelleneinheit ausgewählt wird und das Ansteuern der ausgewählten Schnittstelleneinheit umfasst:
Vorbereiten von mindestens einer zu sendenden Signalsequenz durch den Embedded PC und Ablegen der Signalsequenz in einem ersten Dualport RAM der zweiten Schnittstelleneinheit mit einem Burstzugriff über den Datenbus,
Starten eines Wellenformgenerators der zweiten Schnittstelleneinheit und Übertragen der Signalsequenz an den kartenförmigen Datenträger.

27. Verfahren nach Anspruch 26, wobei die mindestens eine Signalsequenz einen auszugebenden Signalzustand, eine Wartezeit und mindestens ein Flag umfasst.

28. Verfahren nach Anspruch 26 oder 27, wobei abgetastete Signale in einem zweiten Dualport RAM gespeichert werden und über einen Burst-Speicherzugriff von dem Embedded PC ausgelesen werden.

## Claims

1. Electronic module for reading and/or writing data to at least one chip card (102), with at least one first interface (106), which can be connected to the chip card (102) for receiving and/or sending data, and a control unit (108) for controlling the first interface (106), wherein said first interface (106) comprises a first interface unit (134) and a second interface unit (136),
**characterized in that**
said first interface(106) comprises a field programmable gate array, FPGA, (124),
that the control unit (1086) is formed by a bus-compatible embedded PC, which communicates with the first interface (106) via a data bus (110),
that the first interface unit (134) is a part of the FPGA (124) and is formed and configured such that it interchanges data with the chip card (102) by using a first communication protocol, and
that the second interface unit (136) is a part of the FPGA (124) separate from the first interface unit (134) and is formed and configured such that it interchanges data with the chip card (102) by using at least one second communication protocol,
wherein the embedded PC (108) is formed such that it selects for fabricating, programming and testing chip cards (102) at least one of the interface units (134, 136) for receiving and/or sending the data in dependence of a type of protocol assigned to the chip card (102).

2. Electronic module according to Claim 1, wherein the first communication protocol is an asynchronous protocol and the at least one second protocol is a synchronous protocol.

3. Electronic module according to Claim 2, wherein the first interface unit (134) comprises a send register (145) for saving the data to be transferred to the card-type data carrier (102), a receive register (146) for saving the data received from the card-type data carrier, a clock control unit (147) for controlling a transfer cycle and an interface controller (149) for controlling the asynchronous data transfer.

4. Electronic module according to Claim 2 or 3, wherein the second interface unit (136) comprises a waveform generator (148) for generating a send signal, which is connected to the data bus (110) via at least one memory (150) with freely selectable access.

5. Electronic module according to one of the preceding claims, wherein the at least one first interface (106) also comprises at least one contacting head (121, 122) for the electrical contacting of electrical contacts of the chip card (102).

6. Electronic module according to Claim 5, wherein at least one of the contacting heads is constructed as a separate external contacting head module (121).

7. Electronic module according to Claim 5 or 6, wherein at least one of the contacting heads is integrated constructively in the electronic module (100).

8. Electronic module according to one of the claims 5 to 7, wherein the at least one first interface (106) comprises a plug-in interface circuit (118) for connecting the contacting head (121, 122).

9. Electronic module according to one of the claims 5 to 8, wherein the contacting head (121, 122) is set up to carry out signal preparation of the data received from the chip card (102).

10. Electronic module according to one of the claims 5 to 9, wherein the contacting head (121, 122) is a passive contacting head.

11. Electronic module according to one of the preceding claims, wherein the data bus (110) is a peripheral component interconnect bus.

12. Electronic module according to one of the preceding claims, wherein the electronic module (100) comprises a clock generation unit (137), which produces an adjustable clock signal in dependence of control signals from the control unit (108).

13. Electronic module according to Claim 13, wherein the clock generation unit (137) comprises a phase-locking control loop (138) with a feedback divider (140), which is arranged in a feedback path of the phase-locking control loop, and wherein the divider ratio of the feedback divider (140) can be adjusted in response to the control signal.

14. Electronic module according to Claim 13, wherein the feedback divider (140) is constructed as a field programmable gate array.

15. Electronic module according to Claim 13 or 14, wherein the clock generation unit (137) comprises a second divider (142), which receives the output signal of the phase-locking control loop(138) to produce the clock signal and the divider ratio of which can be set by the control unit (108).

16. Electronic module according to Claim 15, wherein the second divider (142) is constructed as a field programmable gate array.

17. Electronic module according to one of the preceding claims, wherein at least one second interface (132) is provided for communication with a higher level control unit (130).

18. Electronic module according to Claim 17, wherein the second interface (132) is an Ethernet interface.

19. Electronic system with an electronic module (100) according to at least one of the claims 1 to 18 and at least one card shaped data carrier (102), wherein the data carrier is formed by a SIM card, a smart card, a flash card or a multimedia card.

20. Electronic system with an electronic module (100) according to at least one of the claims 1 to 18 and at least one chip card (102), wherein the chip card is formed by a not yet fully assembled chip module.

21. Method for fabricating, programming and testing chip cards by means of an electronic module according to one of the claims 1 to 20, said method comprising the following steps:
connecting the chip card to a first interface having a first and a second interface unit,
selecting at least one interface unit of the first interface in accordance with a predetermined communication protocol associated with the chip card by a bus-compatible embedded PC,
controlling the selected interface unit by the embedded PC via a data bus for sending and/or receiving data.

22. Method according to Claim 21, wherein for the case that an asynchronous communication protocol is associated with the card-type data carrier, a first interface unit is selected and the control of the selected interface unit comprises:
preparation of data to be sent by the embedded PC and byte-wise transfer to a send register of the first interface unit via the data bus.

23. Method according to Claim 22, wherein the data from the send register are sent under control of an interface controller to the chip card and after the termination of the transfer an interrupt signal is transferred to the embedded PC from the interface controller.

24. Method according to Claim 23, wherein the interface controller furthermore monitors conformance to the minimum waiting times.

25. Method according to one of the claims 22 to 24, wherein data, which are sent from the chip card, are saved in a receive register of the first interface unit and the interface controller informs the embedded PC.

26. Method according to Claim 25, wherein for the case that a synchronous communication protocol is associated with the chip card, a second interface unit is selected and the control of the selected interface unit comprises:
preparation of at least one signal sequence to be sent by the embedded PC and saving of the signal sequence in a first dual-port RAM of the second interface unit with a burst access via the data bus,
starting of a waveform generator of the second interface unit and transfer of the signal sequence to the chip card.

27. Method according to Claim 26, wherein the at least one signal sequence comprises a signal status to be output, a waiting period and at least one flag.

28. Method according to Claim 26 or 27, wherein the sampled signals are saved in a second dual-port RAM and read out via a burst memory access from the embedded PC.

## Revendications

1. Module électronique pour lire et/ou inscrire des données sur au moins une carte à puce (102), avec au moins une première interface (106) qui, pour recevoir et/ou envoyer des données, est apte à être reliée à la carte à puce (102), et une unité de commande (108) pour commander la première interface (106), la première interface (106) comprenant une première unité d'interface (134) et une seconde unité d'interface (136),
**caractérisé en ce que** la première interface (106) comprend un circuit FPGA (Field Programmable Gate Array) (124),
**en ce que** l'unité de commande (108) est formée par un PC intégré apte à être relié par un bus, qui communique avec la première interface (106) par l'intermédiaire d'un bus de données (110),
**en ce que** la première unité d'interface (134) est conçue et configurée comme un élément du circuit FPGA (124) de manière à échanger des données avec la carte à puce (102) en utilisant un premier protocole de communication,
et **en ce que** la seconde unité d'interface (136) est un élément du circuit FPGA (124) qui est différent de la première unité d'interface (134) et est conçue et configurée de manière à échanger des données avec la carte à puce (102) à l'aide d'au moins un second protocole de communication,
le PC intégré (108) étant conçu de telle sorte que pour la réception et/ou l'envoi des données pour la fabrication, la programmation et le contrôle de cartes à puce (102), il choisit l'une des unités d'interface (134, 136) en fonction d'un type de protocole associé à la carte à puce (102).

2. Module électronique selon la revendication 1, dans lequel le premier protocole de communication est un protocole asynchrone et le ou les seconds protocoles sont des protocoles synchrones.

3. Module électronique selon la revendication 2, dans lequel la première unité d'interface (134) comporte un registre d'envoi (145) pour stocker les données à transmettre au support de données en forme de carte (102), un registre de réception (146) pour stocker les données reçues à partir du support de données en forme de carte, une unité de commande de rythme (147) pour commander un rythme de transmission, et une unité d'interface (149) pour commander la transmission de données asynchrone.

4. Module électronique selon la revendication 2 ou 3, dans lequel la seconde unité d'interface (136) comporte un générateur de forme d'onde (148) pour produire un signal d'émission, qui est relié au bus de données (110) par au moins une mémoire à accès direct (150).

5. Module électronique selon l'une au moins des revendications précédentes, dans lequel la ou les premières interfaces (106) comportent par ailleurs une tête de connexion (121, 122) pour la connexion électrique de raccordements électriques du support de données en forme de carte (102).

6. Module électronique selon la revendication 5, dans lequel l'une au moins des têtes de connexion est conçue comme un module de tête de connexion extérieur séparé (121).

7. Module électronique selon la revendication 5 ou 6, dans lequel l'une au moins des têtes de connexion est intégrée dans le module électronique (100).

8. Module électronique selon l'une des revendications 5 à 7, dans lequel la ou les premières interfaces (106) comportent un circuit d'interface enfichable (118) pour le raccordement de la tête de connexion (121, 122).

9. Module électronique selon l'une des revendications 5 à 8, dans lequel la tête de connexion (121, 122) est installée pour effectuer un traitement de signaux préalable des données reçues à partir du support de données en forme de carte (102).

10. Module électronique selon l'une des revendications 5 à 9, dans lequel la tête de connexion (121, 122) est une tête de connexion passive.

11. Module électronique selon l'une des revendications précédentes, dans lequel le bus de données (110) est un bus PCI (Peripheral Component Interconnect).

12. Module électronique selon l'une des revendications précédentes, dans lequel le module électronique (100) comporte une unité d'horloge (137) qui produit un signal d'horloge réglable en fonction de signaux de commande de l'unité de commande (108).

13. Module électronique selon la revendication 12, dans lequel l'unité d'horloge (137) comprend une boucle de régulation à verrouillage de phase (138) avec un diviseur de rétroaction (140) qui est disposé sur une trajectoire de rétroaction de ladite boucle de régulation à verrouillage de phase, et le rapport du diviseur de rétroaction (140) est réglable en réponse au signal de commande.

14. Module électronique selon la revendication 13, dans lequel le diviseur de rétroaction (140) est construit comme un circuit FPGA.

15. Module électronique selon l'une des revendications 13 ou 14, dans lequel l'unité d'horloge (137) comporte un second diviseur (142) qui, pour produire le signal d'horloge, reçoit le signal de sortie de la boucle de régulation à verrouillage de phase (138), et le rapport de ce diviseur est réglable par l'unité de commande (108).

16. Module électronique selon la revendication 15, dans lequel le second diviseur (142) est construit comme un circuit FPGA.

17. Module électronique selon l'une des revendications précédentes, dans lequel il est prévu au moins une seconde interface (132) pour la communication avec une unité de commande supérieure (130).

18. Module électronique selon la revendication 17, dans lequel la seconde interface (132) est une interface Ethernet.

19. Système électronique avec un module électronique (100) selon l'une au moins des revendications précédentes et au moins un support de données en forme de carte (102), dans lequel le support de carte est formé par une carte SIM, une carte à puce, une carte mémoire flash ou une carte multimédia.

20. Système électronique avec un module électronique (100) selon l'une au moins des revendications 1 à 18 et au moins une carte à puce (102), la carte à puce étant formée par un module de puce pas encore complètement monté.

21. Procédé pour la fabrication, la programmation et le contrôle de cartes à puce à l'aide d'un module électronique selon l'une des revendications 1 à 18, ce procédé comprenant les étapes suivantes :
liaison de la carte à puce avec la première interface qui comporte les première et seconde unités d'interface,
sélection d'une unité d'interface de la première interface en accord avec un protocole de communication prédéfini appartenant à la carte à puce, grâce à un PC intégré apte à être relié par un bus,
commande de l'unité d'interface sélectionnée, grâce au PC intégré, par l'intermédiaire d'un bus de données pour envoyer et/ou recevoir les données.

22. Procédé selon la revendication 21, selon lequel dans le cas où un protocole de communication asynchrone appartient au support de données en forme de carte, une première unité d'interface est sélectionnée et la commande de l'unité d'interface sélectionnée comprend :
la préparation de données à envoyer, grâce au PC intégré, et la transmission par multiplets à un registre d'envoi de la première unité d'interface par l'intermédiaire du bus de données.

23. Procédé selon la revendication 22, selon lequel les données provenant du registre d'envoi sont envoyées au support de données en forme de carte sous la commande d'une commande d'interface, et une fois que la transmission par la commande d'interface est terminée, un signal d'interruption est transmis au PC intégré.

24. Procédé selon la revendication 23, selon lequel la commande d'interface surveille également le respect de temps d'attente minimaux.

25. Procédé selon l'une des revendications 22 à 24, selon lequel les données qui sont envoyées par le support de données en forme de carte sont stockées dans un registre de réception de la première unité d'interface, et la commande d'interface avertit le PC intégré.

26. Procédé selon la revendication 25, selon lequel dans le cas où un protocole de communication synchrone appartient au support de données en forme de carte, une seconde unité d'interface est sélectionnée et la commande de l'unité d'interface sélectionnée comprend :
la préparation d'au moins une séquence de signaux à envoyer, grâce au PC intégré, et le stockage de la séquence de signaux dans une première RAM à double port de la seconde unité d'interface avec un accès par salves par l'intermédiaire du bus de données,
le démarrage d'un générateur de forme d'onde de la seconde unité d'interface et la transmission de la séquence de signaux au support de données en forme de carte.

27. Procédé selon la revendication 26, selon lequel la ou les séquences de signaux comprennent un état de signal à sortir, un temps d'attente et au moins un indicateur.

28. Procédé selon la revendication 26 ou 27, selon lequel des signaux balayés sont stockés dans une seconde RAM à double port et sont lus dans le PC intégré par l'intermédiaire d'un accès à la mémoire par salves.
